# EUROPÄISCHE PATENTSCHRIFT

(11) **EP 2 696 095 B1**
(45) Veröffentlichungstag und Bekanntmachung des Hinweises auf die Patenterteilung: **26.09.2018**
(21) Anmeldenummer: 12005735.1
(22) Anmeldetag: 07.08.2012
(51) Int. Cl.: F16F 9/04

(54) **Luftfeder mit Anschlüssen zur Befestigung der Enden eines Rollbalgs**
Pneumatic spring with attachments for fixing to the end of a roll bellow
Coussin d'air avec raccordements pour la fixation des extrémités d'un soufflet roulant

(43) Veröffentlichungstag der Anmeldung: 12.02.2014
(73) Patentinhaber: Vibracoustic CV Air Springs GmbH, 20099 Hamburg (DE)
(72) Erfinder: Weber, Michael, 21244 Buchholz (DE); Dehlwes, Stephan, 22844 Norderstedt (DE)
(74) Vertreter: Flügel Preissner Schober Seidel

(56) Entgegenhaltungen:
- WO-A1-01/42678
- WO-A1-02/086346
- DE-A1-102010 028 810
- GB-A- 1 248 025
- US-A1- 2007 023 982
- US-B1- 7 175 165

## Beschreibung

Bei Luftfedern besteht das Problem einer sicheren Befestigung der Enden eines Rollbalgs am Abrollkolben beziehungsweise Deckel der Luftfeder. Zum einen soll ein luftdichter Abschluss erreicht werden und zum anderen soll dieser Abschluss bei kostengünstiger Fertigung eine lange Lebensdauer aufweisen.

Bei Nutzfahrzeugen werden heute überwiegend Schlauchrollbälge eingesetzt deren Enden am Abrollkolben beziehungsweise am Deckel der Luftfeder über Klemmringe befestigt werden. Dabei werden an den betreffenden Stellen häufig Ringnuten vorgesehen die eine konturierte Oberfläche haben. Auch Klemmringe mit konturierter Oberfläche sind bekannt. Der Klemmdruck der durch die plastisch zu verformenden Klemmringe am Klemmsitz auf die Rollbalgenden und auch auf den Abrollkolben beziehungsweise Deckel ausgeübt wird ist relativ hoch. Aus diesem Grunde sind die Befestigungsstellen am Abrollkolben und auch am Deckel festigungsmäßig stabil auszuführen. Bei den hohen angewendeten Drücken kann leicht eine Beschädigung der Rollbalgenden auftreten, was zu einer Verkürzung der Betriebsdauer führt. Die Anschlussstellen sind deshalb sehr sorgfältig auszuführen und auch zu montieren.

### Stand der Technik

Es besteht eine Vielzahl von Ausführungsformen für die Befestigung der Rollbalgenden am Abrollkolben beziehungsweise Deckel der Luftfeder. Nur beispielsweise wird auf die EP 0 123 171 A2 verwiesen, bei der das obere Rollbalgende durch einen Klemmring in einer Ringnut am Deckel befestigt wird und das untere Rollbalgende durch eine innenliegende Klammer am Abrollkolben eingeklemmt wird.

Eine Möglichkeit die Rollbalgenden sowohl am Deckel als auch am Abrollkolben in Ringnuten zu befestigen ist in der EP 1 817 507 B1 behandelt. Sowohl Kolben als auch Deckel sind mit starken radialen Ringwandungen versehen, um die von den Klemmringen ausgehenden Klemmkräfte aufzunehmen.

In der US 7,175,165 B1 ist eine Luftfeder offenbart, die einen Deckel, einen Abrollkolben und einen Rollbalg, der mit dem Deckel und dem Abrollkolben verbunden ist, aufweist. Ein Ende des Rollbalgs ist an einem separaten Zwischenglied mittels eines Klemmrings befestigt, das als O-Ring ausgebildet ist. Der O-Ring ist auf den Abrollkolben aufgesteckt bzw. aufgepresst.

Aus der WO 01/42678 A1 und der DE 10 2010 028 810 A1 gehen jeweils eine Luftfederanordnung hervor, deren Luftfederbalg an einem Abrollkolben mittels eines Anbindungselement befestigt ist.

### Darstellung der Erfindung

Der Erfindung liegt die Aufgabe zugrunde, eine Befestigungsmöglichkeit für die Enden eines Rollbalgs zu finden, welche die hohen Qualitätsanforderungen hinsichtlich Sicherheit und Lebensdauer bei den vorhandenen hohen Luftdrücken, insbesondere bei Nutzfahrzeugen zu erfüllen. Es sollen außerdem möglichst Verbesserungen sowohl bei der Fertigung als auch bei der Montage der Luftfeder erreicht werden.

Die Lösung der gestellten Aufgabe wird mit den Merkmalen des Anspruchs 1 erreicht. Die Unteransprüche 2 bis 10 stellen vorteilhafte weitere Ausgestaltungen des Erfindungsgedankens dar.

Der Erfindungsgedanke sieht vor, die Anschlussstellen zur Befestigung der Enden eines Rollbalgs in vom Abrollkolben beziehungsweise Deckel separaten Zwischengliedern unterzubringen. Das Zwischenglied kann unabhängig vom Kolben oder Deckel hergestellt werden, was zu einer Reihe von Vorteilen führt. So kann das Material für das Zwischenglied so gewählt werden, das es die speziellen Anforderungen am Klemmsitz des Klemmverbundes erfüllt und aus einem anderen Material hergestellt werden als der Abrollkolben selbst. Möglich ist auch eine andere Wandstärke für den Klemmsitz zu wählen als für den großvolumigen Abrollkolben. Neben der günstigeren Materialauswahl und Wandstärke kann beispielsweise auch eine Gewichtsreduzierung bei der Luftfeder erreicht werden. Die Fertigung der Luftfeder wird insofern vereinfacht, als der großvolumige Abrollkolben unabhängig vom Zwischenglied hergestellt werden kann und auch nicht mit einer Klemmkontur am Klemmsitz ausgestattet werden muss. Die Verklemmung der Rollbalgenden am Zwischenglied ist auch schon deshalb einfach, weil der Kolben selbst oder auch der Deckel für die Verklemmung nicht mit in die Verklemmanlage eingeführt werden muss. Auch ist die Handhabung bei der abschließenden Dichtigkeitsprüfung der Luftfeder ohne Abrollkolben einfacher. Außerdem ist es möglich ein Zwischenglied an verschiedene Abrollkolben und gegebenenfalls auch an verschiedene Deckel zu montieren. So können unterschiedliche Luftfedervarianten unter Verwendung einer einzigen Form eines Zwischenglieds hergestellt werden. Die Befestigung der Zwischenglieder am Abrollkolben beziehungsweise Deckel erfolgt über eine lösbare Schraubverbindung oder auch eine Steckverbindung, die als Schnappverbindung oder als Bajonettfassung ausgeführt ist.

Die Zwischenglieder werden mit die Klemmsitze bildenden Aufnahmerändern für die Rollbalgenden versehen. Dabei kann die radiale Außenwand der Zwischenglieder in axialer Richtung gleich groß mit dem Aufnahmerand sein. Möglich ist aber auch die radiale Außenwand mit einer größeren axialen Länge zu versehen als für die Aufnahmeränder notwendig ist. Dieses kann vorteilhaft sein, wenn beispielsweise in den Innenraum des Zwischengliedes ein Anschlagpuffer eingesetzt wird.

Eine günstige Ausführungsform sieht vor, dass das Zwischenglied topfförmig ausgebildet ist und die Topfwand eines jeden Zwischenglieds mit einem Aufnahmerand versehen wird. Möglich ist aber auch, das Zwischenglied als Ring auszubilden, der einen Aufnahmerand hat. Bei ringförmigen Zwischengliedern wird bevorzugt eine Steckverbindung verwendet.

Möglich ist auch die Nutzung der erfindungsgemäßen Luftfeder mit Einschluss des Volumens im Abrollkolben selbst. Hierfür können das Zwischenglied und die Deckelwand des Abrollkolbens mit einem Durchlass versehen sein, in den gegebenenfalls ein Rückschlagventil einzusetzen ist.

Der Aufnahmerand am Zwischenglied hat bevorzugt die Form einer Ringnut. Diese Ringnut kann in üblicher Weise mit einer Rillenkontur versehen sein.

Bevorzugt werden die Zwischenglieder so ausgeführt, dass nach ihrer Montage am Abrollkolben beziehungsweise Deckel der Außendurchmesser des Klemmrings dem Außendurchmesser der Abrolloberfläche am Abrollkolben beziehungsweise Deckel entspricht. Dadurch werden sprunghafte Übergänge an den Abrollflächen vermieden.

Darüber hinaus ist es von Vorteil, wenn am Zwischenglied und/oder am Abrollkolben beziehungsweise Deckel Führungsflächen vorgesehen sind, welche die Anordnung des Zwischenglieds am Abrollkolben beziehungsweise Deckel vereinfachten.

### Kurzbeschreibung der Zeichnung

In der beiliegenden Zeichnung sind in schematischer Darstellung mehrere mögliche Ausführungsformen von Luftfedern mit separaten Zwischengliedern dargestellt.

Es zeigt:
- Figur 1,: einen Längsschnitt durch eine Luftfeder mit einem separaten Zwischenglied am Abrollkolben.
- Figur 2,: schematisch eine Luftfeder mit Zwischenglied am Abrollkolben und einem in das Zwischenglied eingesetzten Anschlagpuffer.
- Figur 3,: eine Luftfeder mit Zwischenglied am Abrollkolben mit eingesetzten Anschlagpuffer und Rückschlagventil.
- Figur 4,: eine Luftfeder mit Zwischengliedern am Abrollkolben und am Deckel.
- Figur 5,: eine Luftfeder mit einem ringförmigen Zwischenglied, das über eine Steckverbindung mit dem Abrollkolben verbunden ist.
- Figur 6 und 7,: Zwischenglieder und Abrollkolben mit Führungsflächen für die Zentrierung des Zwischenglieds beim Aufsetzen auf den Abrollkolben.

### Ausführung der Erfindung

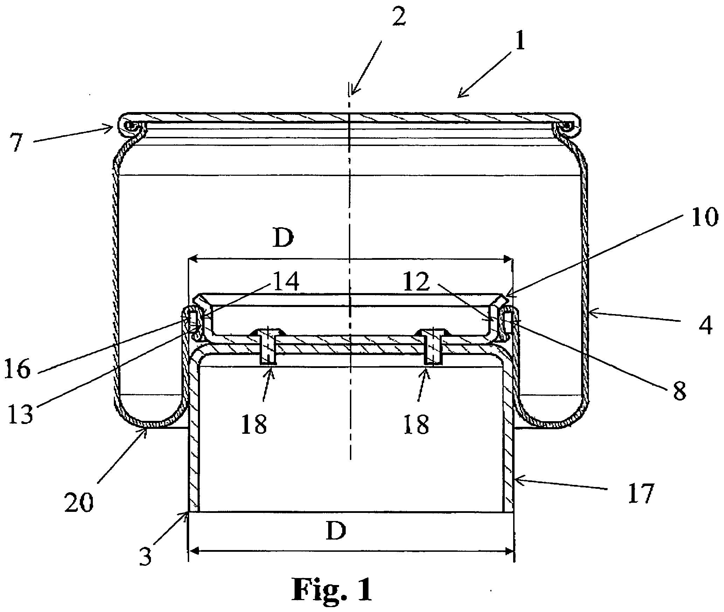

Die in der Figur 1 gezeigte Luftfeder 1 besteht aus dem Deckel 2, dem Abrollkolben 3 und dem Rollbalg 4. Die Luftfeder 1 ist mit dem separat aus Metall hergestellten Zwischenglied 10 versehen, das über die Nietverbindungen 18 mit dem aus einem Kunststoff gebildeten Abrollkolben 3 verbunden ist. Das Zwischenglied 10 ist topfförmig ausgebildet und die Topfwand 12 stellt den Aufnahmerand 13 für den Klemmsitz 14 für das untere Rollbalgende 16 des Rollbalgs 4 dar. Die Klemmung erfolgt über einen Klemmring 8. Mit der Befestigung des Rollbalgendes 16 am Zwischenglied 10 entsteht gesondert von der Ausbildung des Kolbens 3 eine eigene Einheit. Erst nachdem das Rollbalgende 16 am Klemmsitz 14 befestigt ist wird die dann vorliegende Einheit aus Rollbalg 4 und Zwischenglied 10 am Kolben 3 angefügt. Diese Vorgehensweise erleichtert die Montage erheblich, außerdem werden die weiter oben bereits angeführten Vorteile hinsichtlich Materialauswahl und konstruktiver Ausgestaltung ermöglicht. Dabei wird die radiale Außenwand 12 des Zwischenglieds 10 so ausgeführt, dass nach der Befestigung des Rollbalgendes 16 am Zwischenglied 10 der Außendurchmesser D1 des Klemmrings 8 dem Außendurchmesser D der Abrollfläche 17 des Abrollkolbens 3 entspricht. Das obere Ende 7 des Rollbalgs 4 wird durch eine Bördelung 5 am Deckel 2 gehalten. Der unter Druckluft stehende Rollbalg 4 liegt beim Abrollvorgang ohne störenden Übergang zwischen Klemmsitz 14 und Kolben 3 an der Abrolloberfläche 17 des Abrollkolbens 3 an.

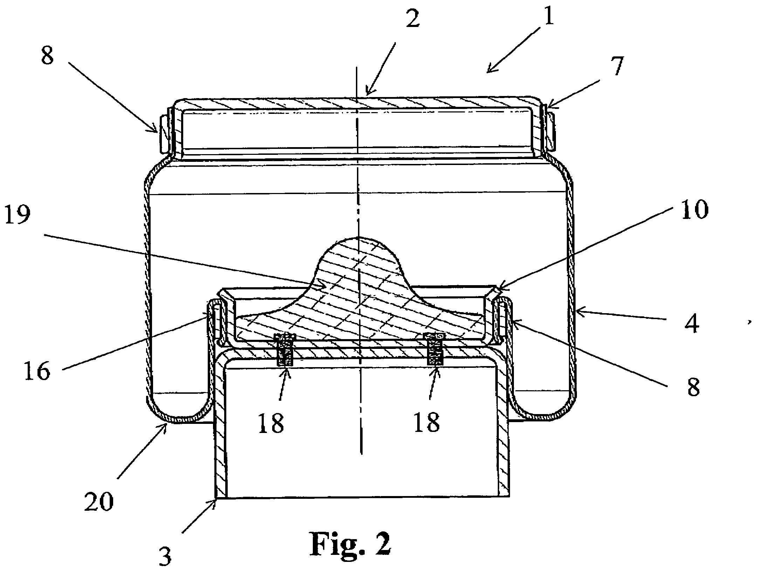

Die Figur 2 zeigt eine Luftfeder 1 mit einem Zwischenglied 10, welches über die Schraubverbindungen 18 mit dem Abrollkolben 3 verbunden ist. In das Zwischenglied 10 ist der Anschlagspuffer 19 eingesetzt. Die Befestigung des Schlauchbalgendes 16 am Zwischenglied 10 erfolgt in gleicher Weise, wie bei Figur 1 bereits beschrieben. Das obere Ende 7 des Schlauchrollbalgs 4 wird an der Außenseite des Deckels 2 über den Klemmring 8 befestigt.

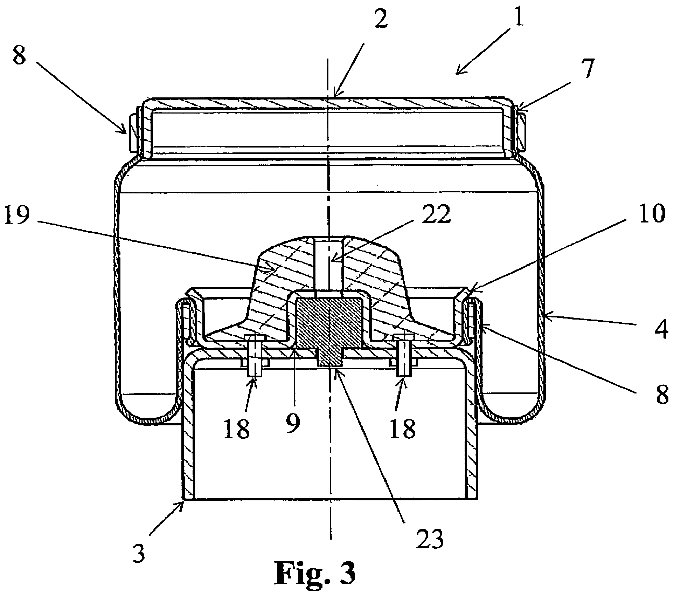

Bei der Ausführungsform nach Figur 3 hat die Luftfeder 1 eine mit der Figur 2 vergleichbare Ausbildung mit der Abweichung, dass zentral in der Mitte des Anschlagpuffers 19, des Zwischenglieds 10 und des Abschlusses 9 des Kolbens 3 ein Durchlass 22 mit dem Rückschlagventil 23 vorhanden ist Auf diese Weise wird das Volumen des Abrollkolbens 3 in die Federwirkung der Luftfeder 1 mit einbezogen.

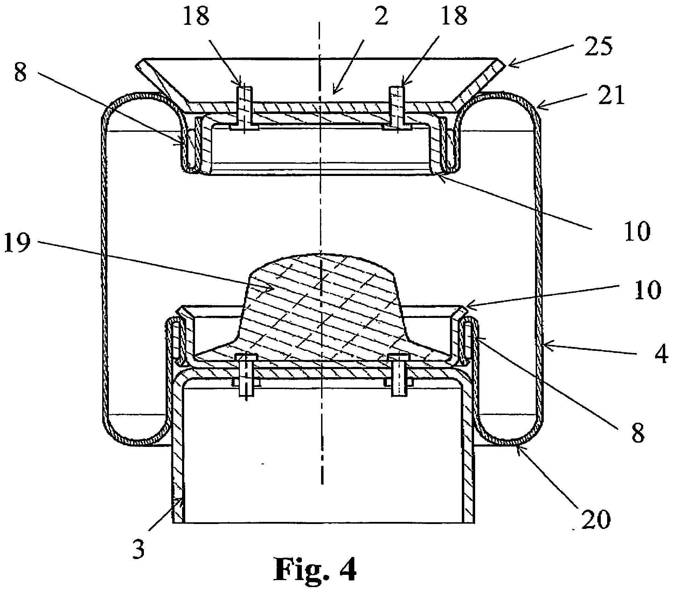

Die Ausgestaltung der Luftfeder 1 nach der Figur 4 zeigt eine Lösung, bei der auch der Deckel 2 mit einem Zwischenglied 10 versehen ist. Das Zwischenglied 10 ist an den Deckel 2 angeschraubt. Die Anbringung des Zwischenglieds 10 am Deckel 2 ist besonders günstig bei der Verwendung eines Rollbalgs 4 mit zwei Rollschlaufen 20 und 21. Der Deckel 2 kann in diesem Fall eine Abrollkontur 25 haben, mit der der Wirkdurchmesser des Rollbalgs 4 an der oberen Schlaufe 21 verändert werden kann, sodass eine entsprechende Einstellung des Federungsverhaltens der Luftfeder 1 erreichbar ist.

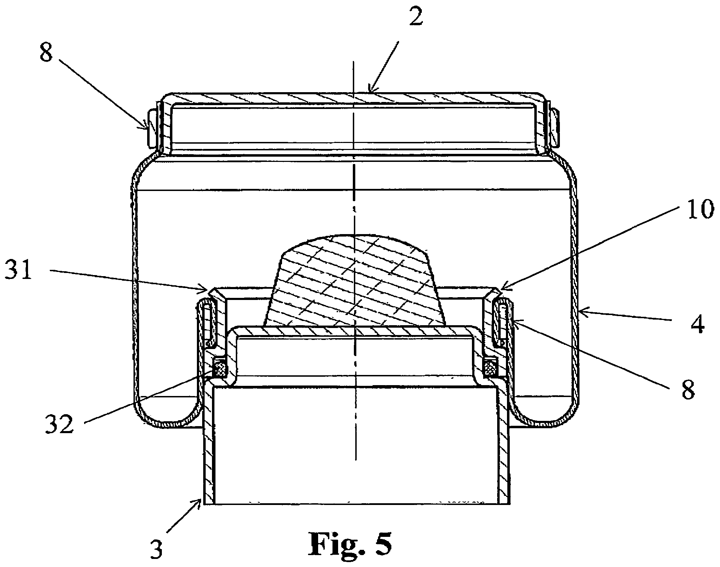

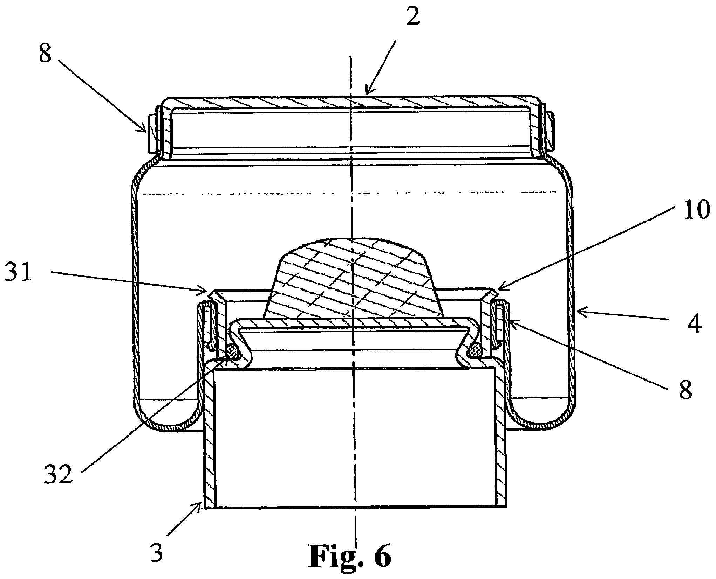

Die Figuren 5 und 6 zeigen mit der Figur 2 vergleichbare Ausführungsformen mit der Abweichung, dass das jeweilige Zwischenglied 10 als Ring 31 ausgebildet ist. Dieses ist von Vorteil, wenn das Zwischenglied 10 über eine Steckverbindung 32 mit dem Abrollkolben 3 verbunden ist. Die Steckverbindung 32 kann als Schnappverbindung oder auch als Bajonettfassung ausgeführt werden. Hierfür kann beispielsweise der Ring 31 auf seinem unteren Rand mit stiftartigen Stützen versehen sein, die an ihren unteren Enden radial abgebogenen Stutzen haben, die in entsprechende Ausnehmungen in der Kolbenwand eingreifen.

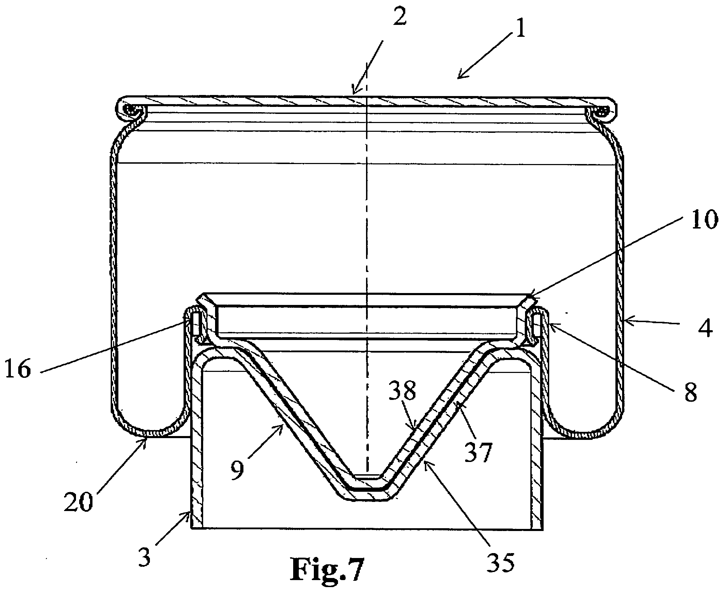

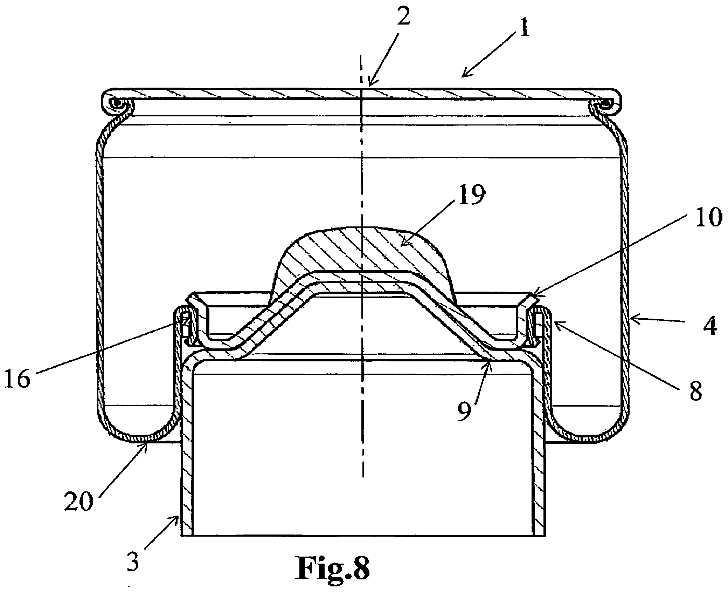

Um die Zuordnung des Zwischenglieds 10 zum Abrollkolben 3 beziehungsweise zum Deckel 2 zu erleichtern, können dieselben mit Führungsflächen 35 versehen sein, welche das Zwischenglied 10 exakt zu seiner zentrischen Position hinführen. Dieses ist in der Figur 7 und 8 gezeigt. In der Figur 7 hat der Kolbenabschluss 9 eine konische Mulde 37, in die die konische Auswölbung 38 des Zwischenglieds 10 passend einfügbar ist. In der Figur 8 ist der Kolbenabschluss 9 konvex und das Zwischenglied 10 konkav ausgebildet.

Bei allen gezeigten Ausführungsformen haben die Zwischenglieder 10 Aufnahmeränder 12 als Klemmsitze 14, die bevorzugt die Form von Ringnuten 13 haben. Diese Ringnuten 13 erleichtern das Einlegen der Schlauchenden 7 und 16 und deren Verklemmung. Die Klemmringe 8 werden in ihrer gewünschten Position gehalten. Außerdem ist es möglich die Rollbälge 4 über die Rollbalgenden 7, 16 mit den Zwischengliedern 10 zu vorgefertigten Einheiten auszubilden, die an unterschiedliche Kolben- bzw. Deckelausbildungen angeschlossen werden können.

## Patentansprüche

1. Luftfeder (1) mit Anschlüssen zur Befestigung der Enden (7,16) eines Rollbalgs (4) am Abrollkolben (3) und/oder Deckel (2), wobei mindestens einer der Anschlüsse aus einem separaten Zwischenglied (10) besteht, das an den Abrollkolben (3) und/oder Deckel (2) anfügbar ist, wobei der Rollbalg (4) ein Schlauchrollbalg (4) ist, dessen mindestens ein Ende (7,16) mittels eines Klemmrings (8) an dem Zwischenglied (10) befestigt ist, **dadurch gekennzeichnet, dass** das Zwischenglied (10) über Schraubverbindungen (18) mit dem Abrollkolben (3) bzw. dem Deckel (2) verbunden ist, oder dass das Zwischenglied (10) über eine Steckverbindung (32) mit dem Abrollkolben (3) bzw. dem Deckel (2) verbunden ist, wobei die Steckverbindung (32) als Schnappverbindung oder als Bajonettfassung ausgeführt ist.

2. Luftfeder nach Anspruch 1, **dadurch gekennzeichnet, dass** das bzw. die Zwischenglieder (10) Aufnahmeränder (13) als Klemmsitze (14) für die Rollbalgenden (7,16) haben.

3. Luftfeder nach einem der Ansprüche 1 oder 2, **dadurch gekennzeichnet, dass** die Zwischenglieder (10) topfförmig ausgebildet sind und die Topfwand (12) jedes Zwischenglieds (10) mit einem Aufnahmerand (13) versehen ist.

4. Luftfeder nach einem der Ansprüche 1 oder 2, **dadurch gekennzeichnet, dass** das Zwischenglied (10) als Ring (31) ausgebildet ist, der einen Aufnahmerand (13) als Klemmsitz (14) hat.

5. Luftfeder nach einem der Ansprüche 1 bis 4, **dadurch gekennzeichnet, dass** in das Zwischenglied (10) ein Anschlagpuffer (19) eingesetzt ist.

6. Luftfeder nach einem der Ansprüche 1 bis 5, **dadurch gekennzeichnet, dass** mittig im Zwischenglied (10) ein Durchlass (22) mit einem Rückschlagventil (23) vorhanden ist.

7. Luftfeder nach einem der Ansprüche 1 bis 6, **dadurch gekennzeichnet, dass** der Aufnahmerand (12) die Form einer Ringnut (13) hat.

8. Luftfeder nach Anspruch 7, **dadurch gekennzeichnet, dass** die Ringnut (13) mit einer Rillenkontur versehen ist.

9. Luftfeder nach einem der Ansprüche 1 bis 8, **dadurch gekennzeichnet, dass** der Außendurchmesser (D) des Klemmrings (8) dem Außendurchmesser (D) der Abrolloberfläche (17) des Abrollkolbens (3) bzw. Deckels (2) entspricht.

10. Luftfeder nach einem der Ansprüche 1 bis 9, **dadurch gekennzeichnet, dass** am Zwischenglied (10) und/oder am Abrollkolben (3) bzw. Deckel (2) Führungsflächen (35) für einen vorgegebenen Einsatzplatz für das Zwischenglied (10) vorgesehen sind.

## Claims

1. Air spring (1) having connections for fixing the ends (7, 16) of a rolling bellows (4) to the rolling piston (3) and/or cover (2), wherein at least one of the connections consisting of a separate intermediate member (10) which can be attached to the rolling piston (3) and/or cover (2), the rolling bellows (4) being a tubular rolling bellows (4), whose at least one end (7, 16) is fixed to the intermediate member (10) by means of a clamping ring (8),
**characterised in that** the intermediate member (10) is connected to the rolling piston (3) or the cover (2) by means of screw connections (18), or the intermediate member (10) is connected to the rolling piston (3) or the cover (2) by means of a plug connection (32), the plug connection (32) being designed as a snap connection or as a bayonet socket.

2. Air spring according to claim 1, **characterised in that** the intermediate member or members (10) have receiving edges (13) as clamping seats (14) for the rolling bellows' ends (7, 16).

3. Air spring according to claim 1 or 2, **characterised in that** the intermediate members (10) are designed in the shape of a cup, and the cup wall (12) of each intermediate member (10) is provided with a receiving edge (13).

4. Air spring according to claim 1 or 2, **characterised in that** the intermediate member (10) is designed as a ring (31) having a receiving edge (13) as a clamping seat (14).

5. Air spring according to any one of claims 1 to 4, **characterised in that** a buffer stop (19) is inserted into the intermediate member (10).

6. Air spring according to any one of claims 1 to 5, **characterised in that** a passage (22) with a non-return valve (23) is provided centrally in the intermediate member (10).

7. Air spring according to any one of claims 1 to 6, **characterised in that** the receiving edge (12) has the shape of an annular groove (13).

8. Air spring according to claim 7, **characterised in that** the annular groove (13) is provided with a notch contour.

9. Air spring according to any one of claims 1 to 8, **characterised in that** the outer diameter (D) of the clamping ring (8) corresponds to the outer diameter (D) of the rolling surface (17) of the rolling piston (3) or of the cover (2).

10. Air spring according to any one of claims 1 to 9, **characterised in that** at the intermediate member (10) and/or the rolling piston (3) guiding surfaces (35) for a predetermined place of insertion of the intermediate member (10) are provided.

## Revendications

1. Ressort pneumatique (1) avec des raccords pour la fixation des extrémités (7, 16) d'un soufflet déroulant (4) sur un piston à enroulement (3) et/ou sur un couvercle (2), dans lequel l'un au moins des raccords est constitué par un organe intermédiaire séparé (10), qui est susceptible d'être rapporté sur le piston à enroulement (3) et/ou sur le couvercle (2), le soufflet déroulant (4) est un soufflet déroulant en forme de tuyau (4) dont au moins une extrémité (7, 16) est fixé sur l'organe intermédiaire (10) au moyen d'une bague de serrage (8),
**caractérisé en ce que** l'organe intermédiaire (10) est relié au piston à enroulement (3) ou au couvercle (2) via des liaisons à vis (18), ou **en ce que** l'organe intermédiaire (10) est relié au piston à d'enroulement (3) ou au couvercle (2) via une liaison à enfichage (32), et la liaison à enfichage (32) est réalisée sous forme de liaison à encliquetage ou de douille à baïonnette.

2. Ressort pneumatique selon la revendication 1, **caractérisé en ce que** le ou les organes intermédiaires (10) ont des bordures de réception (13) à titre de sièges de serrage (14) pour les extrémités de soufflet déroulant (7, 16).

3. Ressort pneumatique selon l'une des revendications 1 ou 2, **caractérisé en ce que** les organes intermédiaires (10) sont réalisés en forme de godet et la paroi en godet (12) de chaque organe intermédiaire (10) est pourvue d'une bordure de réception (13).

4. Ressort pneumatique selon l'une des revendications 1 ou 2, **caractérisé en ce que** l'organe intermédiaire (10) est réalisé sous forme de bague (31) qui possède une bordure de réception (13) à titre de siège de serrage (14).

5. Ressort pneumatique selon l'une des revendications 1 à 4, **caractérisé en ce qu'**un tampon de butée (19) est mis en place dans l'organe intermédiaire (10).

6. Ressort pneumatique selon l'une des revendications 1 à 5, **caractérisé en ce qu'**une traversée (22) avec une soupape antiretour (23) est prévue au milieu dans l'organe intermédiaire (10).

7. Ressort pneumatique selon l'une des revendications 1 à 6, **caractérisé en ce que** la bordure de réception (12) a la forme d'une gorge annulaire (13).

8. Ressort pneumatique selon la revendication 7, **caractérisé en ce que** la gorge annulaire (13) est pourvue d'un contour à rainures.

9. Ressort pneumatique selon l'une des revendications 1 à 8, **caractérisé en ce que** le diamètre extérieur (D) de la bague de serrage (8) correspond au diamètre extérieur (D) de la surface de déroulement (17) du piston déroulant (3) ou du couvercle (2).

10. Ressort pneumatique selon l'une des revendications 1 à 9, **caractérisé en ce que** des surfaces de guidage (35), pour un emplacement prédéterminé de mise en place pour l'organe intermédiaire (10) sont prévues sur l'organe intermédiaire (10) et/ou sur le piston déroulant (3) ou sur le couvercle (2).
